# EUROPÄISCHE PATENTSCHRIFT

(11) **EP 0 725 675 B1**
(45) Veröffentlichungstag und Bekanntmachung des Hinweises auf die Patenterteilung: **23.04.1997**
(21) Anmeldenummer: 94931507.1
(22) Anmeldetag: 26.10.1994
(51) Int. Cl.: B01J 8/06, C01B 3/38, C07C 5/333, C07C 15/02

(54) **KATALYTISCHER REAKTOR FÜR ENDOTHERME REAKTIONEN**
CATALYTIC REACTOR FOR ENDOTHERMIC REACTIONS
REACTEUR CATALYTIQUE POUR REACTIONS ENDOTHERMIQUES

(30) Priorität: 29.10.1993 IT RM930719
(43) Veröffentlichungstag der Anmeldung: 14.08.1996
(73) Patentinhaber: MANNESMANN Aktiengesellschaft, 40213 Düsseldorf (DE); KTI GROUP B.V., NL-2700 AB Zoetermeer (NL)
(72) Erfinder: GIACOBBE, Francesco, I-00147 Rom (IT)
(74) Vertreter: Meissner, Peter E., Dipl.-Ing.
(86) Internationale Anmeldenummer: DE9401293
(87) Internationale Veröffentlichungsnummer: WO9511745

(56) Entgegenhaltungen:
- EP-A- 0 334 792
- EP-A- 0 366 270
- EP-A- 0 369 556

## Beschreibung

Die Erfindung betrifft einen katalytischen Reaktor für endotherme Reaktionen gemäß dem Oberbegriff des Patentanspruchs 1. Beispiele für derartige Reaktionen sind etwa die Herstellung von Wasserstoff durch Dampfreformierung von Kohlenwasserstoffen und Dehydrierprozesse, wie sie z.B. ausgeführt werden zur Herstellung von Styren aus Ethylbenzen oder von Propylen aus Propan oder von Isobutylen aus Isobutan.

Aus der EP 0 380 192 B1 ist ein katalytischer Reaktor bekannt, der nach außen eine zylindrische Form aufweist und einen Reaktionsraum mit ringförmigem Querschnitt besitzt. Das zu katalysierende Einsatzmaterial wird von unten in den mit einem katalytischen Stoff gefüllten Reaktionsraum eingeführt, während das erhaltene katalytisch umgewandelte Produkt am oberen Ende des Reaktionsraums abgezogen wird. Dieser bekannte Reaktor ist mit einem Brenner beheizbar, der unterhalb des Basisniveaus des Reaktionsraums angeordnet ist, im Bereich seiner Verbrennungszone von einer feuerfesten Umhüllung umgeben ist und mit seiner Flammrichtung koaxial zur Längsachse des Reaktionsraums liegt. Die nach oben aufsteigenden Verbrennungsgase des Brenners werden über nahezu die gesamte Länge des Reaktionsraums in einem Wärmeverteiler geführt, der als rohrförmiger Körper aus einem gut wärmeleitenden Material gebildet ist und unmittelbar an die feuerfeste Verbrennungsraumwandung anschließt. Zwischen dem rohrförmigen Wärmeverteiler und der inneren Begrenzungswand des ringförmigen Reaktionsraums verbleibt ein Ringspalt. Die entstehenden heißen Verbrennungsgase werden daher zunächst durch den Wärmeverteiler nach oben geleitet und am oberen Ende des Wärmeverteilers in den Ringspalt hinein umgelenkt. Die Verbrennungsgase strömen dann von oben nach unten durch den Ringspalt und geben dabei durch die innere Begrenzungswand hindurch Wärme in den Reaktionsraum ab. Gleichzeitig nehmen die nach unten an der Wand des Wärmeverteilers vorbeiströmenden Verbrennungsgase aber auch von den im Inneren des Wärmeverteilers nach oben strömenden heißen Verbrennungsgasen Wärme auf, so daß die Temperatur der im Ringspalt befindlichen Gase nahezu konstant bleibt. Auf diese Weise kann die bekannte Vorrichtung als praktisch isothermer Reaktor betrieben werden.

In einer anderen Ausführungsform weist der aus der EP 0 380 192 B1 bekannte Reaktor anstelle eines zentral angeordneten Wärmeverteilers mehrere parallele Wärmeverteiler auf. Auch bei dieser Vorrichtung ist nur ein einziger Brenner vorgesehen, der mit seinem Verbrennungsraum unterhalb des Basisniveaus des Reaktionsraums angeordnet ist. Da in dem Verbrennungsraum selbst praktisch keine Wärme nach außen abgegeben wird, findet die Verbrennung des jeweils eingesetzten Brennstoffs unter adiabatischen Bedingungen statt, so daß je nach Brennstoff unerwünscht hohe Flammtemperaturen erreicht werden. Zur Absenkung der Temperatur der Verbrennungsgase kann zwar anstelle von einem üblicherweise ca. 10°% betragenden Luftüberschuß mit einem erheblich, z.B. auf 50 °% erhöhten Luftüberschuß gearbeitet werden. Dies führt aber zwangsläufig zu einer entsprechenden Erhöhung der Abgasmenge und der damit verbundenen Wärmeverluste, was wiederum unerwünscht ist. Als Alternative für eine Temperaturabsenkung wird in der EP 0 380 192 B1 eine Rückführung von Abgas in die Verbrennungszone vorgeschlagen. Dies ist insbesondere mit dem Nachteil eines zusätzlichen Bauaufwands verbunden.

Aus der EP 0 369 566 B1 ist ein weiterer endothermer Reaktor bekannt, dessen mit einem Katalysator gefüllter Reaktionsraum in Form eines am unteren Ende verschlossenen Mantelrohres ausgebildet ist, in das ein Steigrohr eingesetzt ist, so daß das zu behandelnde Material gegenläufig einerseits durch den Ringraum zwischen den Mantelrohr und dem Steigrohr und andererseits durch das Steigrohr strömen kann, um den Reaktionsraum zu passieren. Bei diesem Apparat wird das heiße Verbrennungsgas zur Beheizung des Reaktionsraums in einem separaten Anlagenteil unter adiabatischen Bedingungen erzeugt und anschließend seitlich im Bereich des unteren Endes des Reaktionsraums in das feuerfeste Gehäuse eingeführt, welches den Reaktor außen mit Abstand umgibt. Um zu vermeiden, daß das heiße Verbrennungsgas direkt auf die Wand des Reaktionsraums auftrifft und dort wegen der hohen Temperatur zu Schädigungen führt, ist die Zuführung des Verbrennungsgases im Gehäuse so gestaltet, daß die heißen Gase zunächst auf eine rohrförmige Barriere aus Feuerfestmaterial stoßen, nach oben umgelenkt und vom oberen Ende der Feuerfestbarriere entlang einer zweiten rohrförmigen Barriere aus einem gut wärmeleitenden Material wieder nach unten geführt werden. Erst am unteren Ende der zweiten Barriere kann das Verbrennungsgas wieder nach oben strömen und mit der Wand des Reaktionsraums in Wärmetauschkontakt treten. Gleichzeitig findet auch ein Wärmetausch zwischen den gegenläufigen Verbrennungsgasströmen durch die wärmeleitende Wand der zweiten Barriere hindurch statt. Durch diese Vorkehrungen wird wie bei der aus der EP 0 380 192 B1 bekannten Vorrichtung eine deutliche Temperaturabsenkung des Verbrennungsgases bewirkt, so daß die Wand des Reaktionsraums vor unzulässigen thermischen Belastungen geschützt wird. Der Reaktionsraum dieses Reaktors ist auf ein einziges Reaktorgefäß beschränkt, so daß für Anlagen unterschiedlicher Leistungsfähigkeit jeweils eine entsprechend neue Dimensionierung des Reaktorgefäßes erfolgen muß. Außerdem ist es nachteilig, daß die den hohen Temperaturen ausgesetzten Barrieren Verschleißteile darstellen, die nach einer gewissen Betriebszeit ausgetauscht werden müssen.

Aufgabe der Erfindung ist es, einen katalytischen Reaktor für endotherme Reaktionen der gattungsgemäßen Art dahingehend zu verbessern, daß eine thermische Schädigung des Reaktorgefäßes vermieden wird, ohne daß aufwendige Baumaßnahmen oder unerwünschte Erhöhungen der Abgasmengen sowie Nachteile bei der Energieausnutzung der eingesetzten Brennstoffe in Kauf genommen werden müssen.

Gelöst wird diese Aufgabe für einen gattungsgemäßen Reaktor mit den kennzeichnenden Merkmalen des Patentanspruchs 1. Vorteilhafte Weiterbildungen der Erfindung sind in den Unteransprüchen 2 bis 13 angegeben.

Die erfindungsgemäße Lösung sieht als wesentliches Element vor, die Verbrennung unter nicht adiabatischen Bedingungen durchzuführen, also bereits während der Verbrennung Wärme aus dem Flammraum abzuleiten, so daß die maximal entstehende Flammtemperatur erheblich abgesenkt wird. Dies wird dadurch erreicht, daß nicht nur eine Vielzahl von Brennern, sondern eine Vielzahl von Katalysatorgefäßen vorgesehen ist, welche in den Flammraum der Brenner eintauchen. In dem Bereich des Flammraums sind die Katalysatorgefäße jeweils von einer Barriere umgeben, die nachfolgend als Wärmeverteiler bezeichnet wird, da sie aus einem gut wärmeleitenden Material besteht und die Wärme aufnimmt und möglichst gleichmäßig weiterverteilt. Die Katalysatorgefäße sind jeweils zwischen den Brennern angeordnet.

Anhand der in den Fig. 1 bis 7 dargestellten Ausführungsbeispiele wird die Erfindung nachfolgend näher erläutert. Es zeigen:
- Fig. 1: einen Längsschnitt durch einen erfindungsgemäßen Reaktor,
- Fig. 1a: die Einzelheit X aus Fig. 1,
- Fig. 2: den Querschnitt A aus Fig. 1,
- Fig. 3: den Querschnitt B aus Fig. 1,
- Fig. 4: einen Längsschnitt eines abgewandelten Reaktors,
- Fig. 4a: eine Vergrößerung des unteren Endes des Reaktorgefäßes aus Fig. 4,
- Fig. 5: einen Längsschnitt durch einen isothermen erfindungsgemäßen Reaktor,
- Fig. 6: den Querschnitt C aus Fig. 5 und
- Fig. 7: einen vergrößerten Detailschnitt des Reaktors aus Fig. 5.

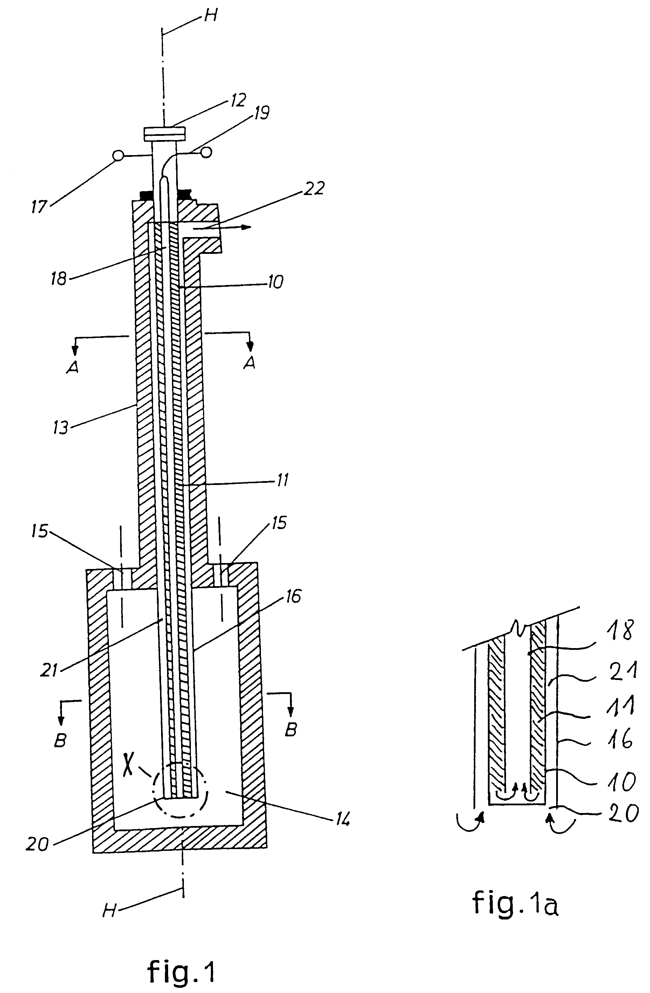

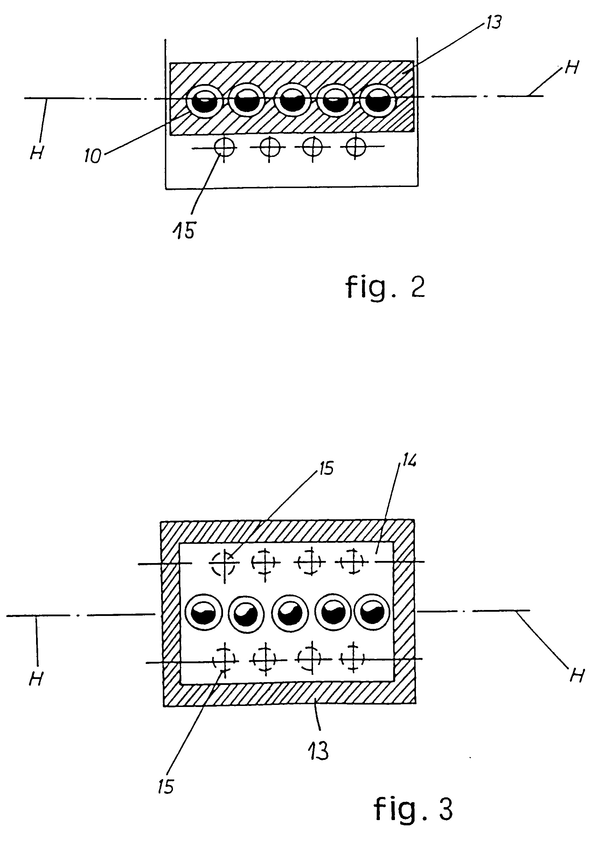

Bei dem in den Fig. 1 bis 3 in unterschiedlichen Schnitten dargestellten katalytischen Reaktor wurden insgesamt fünf rohrförmige Katalysatorgefäße 10 parallel zueinander in vertikaler Längsrichtung angeordnet. Ihre Längsachsen liegen in einer gemeinsamen Ebene H. Die Katalysatorgefäße 10 haben zu den jeweils unmittelbar benachbarten Katalysatorgefäßen 10 vorzugsweise den gleichen Abstand (Fig. 3). Beiderseits der Ebene H ist mit Abstand von den Katalysatorgefäßen 10 jeweils eine Reihe von vier Brennern 15 abgeordnet, die untereinander in gleicher Weise voneinander beabstandes sind wie die Katalysatorgefäße 10. Die Längsachsen der Brenner 15 sind in der Weise versetzt zu den Längsachsen der Katalysatorgefäße 10, daß sich die Brenner 15 der beiden Brennerreihen in vorteilhafter Weise jeweils im Bereich des Zwischenraums zwischen zwei Katalysatorgefäßen 10 gegenüberliegen.

Anstelle einer spiegelsymmetrischen Anordnung könnten auch andere Anordnungen von Brennern 15 und Katalysatorgefäßen 10 gewählt werden. Beispielsweise ließen sich die Brennerreihen konzentrisch in und um eine kreisförmige Anordnung der Katalysatorgefäße 10 positionieren, so daß auch dann noch eine symmetrische Anordnung gegeben wäre. Im Grundsatz wäre auch eine weniger regelmäßige Verteilung der Brenner 15 und Katalysatorgefäße 10 möglich. Im Interesse einer möglichst gleichmäßigen wärmetechnischen Wirkung hat die symmetrische Anordnung jedoch erhebliche Vorteile.

In bevorzugter Weise sind die Brenner mit ihrer Flammrichtung vertikal ausgerichtet, und zwar von oben nach unten weisend. Auch eine schräg zur Längsachse der Katalysatorgefäße 10 oder sogar senkrecht von der Seite darauf gerichtete Brenneranordnung wäre grundsätzlich möglich, wenngleich die parallele Anordnung wegen der gleichmäßigeren Temperaturverteilung bevorzugt wird. Anstelle einer einzigen Reihe von Katalysatorgefäßen 10 könnten in Weiterbildung der Erfindung auch mehrere Reihen vorgesehen sein, die jeweils im Wechsel mit Brennerreihen parallel zueinander angeordnet werden. Auf diese Weise lassen sich nahezu beliebige Anpassungen an eine gewünschte Reaktorkapazität erzielen, ohne die Konstruktion der einzelnen Katalysatorgefäße 10 verändern zu müssen.

Wie der Längsschnitt in Fig. 1 zeigt, hat der als Beispiel dargestellte erfindungsgemäße Reaktor ein Gehäuse 13, das im wesentlichen aus feuerfestem Material besteht. Das Gehäuse 13 ist in seinem unteren Teil zu einer Strahlungskammer 14 erweitert, die in Wanddurchbrüchen in ihrem Dach die Brenner 15 aufnimmt. Die Katalysatorgefäße 10, von denen der Längsschnitt nur ein einziges zeigt, tauchen etwa zu einem Drittel ihrer Länge von oben in die Strahlungskammer 14 ein. Jedes Katalysatorgefäß 10 besitzt jeweils eine Produktgaszuleitung 17 für das katalytisch umzuwandelnde Einsatzmaterial. Die Produktgaszuleitung 17 ist in diesem Beispiel am oberen Ende des Gehäuses 13 seitlich angeordnet. Da konzentrisch in dem Katalysatorgefäß 10 jeweils ein Steigrohr 18 eingebaut ist, das sich praktisch über die gesamte axiale Länge des Katalysatorgefäßes 10 erstreckt, kann die Produktgasableitung 19, durch die die in der katalytischen Reaktion erzeugten Produkte abgezogen werden, im oberen Teil des Katalysatorgefäßes 10 ebenfalls seitlich angeordnet werden. Dies hat den Vorteil, daß die Katalysatorgefäße 10 jeweils an ihrem oberen Ende im Gehäuse 13 frei hängend befestigt werden können. Da im Ruhezustand ein ausreichend großer Abstand des unteren Endes des Katalysatorsgefäßes 10 vom Boden des Gehäuses 13 gelassen wurde, können sich die Katalysatorgefäße 10 bei Erwärmung im Betriebszustand frei nach unten ausdehen. Würde man die Produktgasableitung 19 an das der Prozeßgaszuleitung 17 gegenüberliegende Ende der Katalysatorgefäße 10 anschließen, wären aufwendige konstruktive Maßnahmen zu treffen, um die thermischen Dehnungen zu kompensieren, damit keine Beschädigungen der Rohrleitungen eintreten.

Da die Prozeßgaszuleitung 17 und die Produktgasableitung 19 nicht am äußersten oberen Ende der Katalysatorgefäße 10 angeordnet sind, sondern dicht darunter liegen, konnte die obere Stirnfläche mit einem gut zugänglichen, abnehmbaren Deckel 12 versehen werden, durch den das katalytische Material eingefüllt und bei Bedarf ausgetauscht wird. Über die gesamte Länge, mit der die Katalysatorgefäße 10 in die Strahlungskammer 14 eintauchen, sind sie jeweils mit Abstand von einem rohrartigen Wärmeverteiler 16 aus einem gut wärmeleitenden Material, vorzugsweise aus einem hitzebeständigen Stahl umgeben, so daß zwischen der Wand des Katalysatorgefäßes 10 und dem Wärmeverteiler 16 ein ringförmiger Spalt 21 gebildet wird. Dies ist in der Fig. 1a, die die Einzelheit X aus Fig. 1 vergrößert und detaillierter zeigt, näher dargestellt. Man erkennt, daß das Katalysatorgefäß 10 an seiner unteren Stirnseite durch einen Boden dicht verschlossen ist. Das von oben nach unten durch die in dem ringförmigen Raum 11 befindliche Katalysatormasse 10 strömende Produktgas wird im Bereich der Stirnseite umgelenkt und kann durch einen ringförmigen Durchtrittsspalt in das Steigrohr 18 einströmen und nach oben abgezogen werden. Dieser Durchtrittsspalt wird dadurch gebildet, daß das Steigrohr 18 mit geringem Abstand vom Boden des Katalysatorgefäßes 10 endet. Die Produktgasableitung 19 ist mit dem Steigrohr 18 verbunden (Fig. 1) und durch die Wand des Katalysatorgefäßes 10 herausgeführt. Die rohrförmigen Wärmeverteiler 16 sind an dem Dach der Strahlungskammer 14 befestigt. Die Länge der Wärmeverteiler 16 ist so bemessen, daß zwischen dem Boden des Gehäuses 13 und der Stirnseite des Wärmeverteilers 16 jeweils unter Berücksichtigung der thermischen Längendehnung im Betriebsfall noch ein ausreichend großer Abstand gehalten wird, damit das heiße Verbrennungsgas von unten über den Einlaßspalt in den ringförmigen Spalt 21 zwischen dem Wärmeverteiler 16 und dem Katalysatorgefäß 10 einströmen kann. In manchen Fällen empfiehlt es sich, für den Eintritt der Verbrennungsgase in den Spalt 21 Schlitze in der Wand der Wärmeverteiler 16 vorzusehen. Dies hat den Vorteil, daß allein durch die Wahl der Zahl und Größe dieser Schlitze die Strömungsverhältnisse der Verbrennungsgase gezielt eingestellt werden können, ohne die äußere Geometrie der Wärmeverteiler 16 und Katalysatorgefäße 10 verändern zu müssen.

Die für die endotherme Reaktion benötigte Wärme wird dem durch das Katalysatorgefäß 10 strömenden Prozeßgas von dem Teilstrom der Verbrennungsgase zugeführt, der durch den Spalt 21 geht. Da der Wärmeverteiler 16 wärmeleitend ist, nimmt dieser Verbrennungsgasstrom gleichzeitig zu seiner Wärmeabgabe aber auch wieder Wärme aus der Strahlungskammer 14 durch die Wand des Wärmeverteilers 16 hindurch auf, so daß er bis zum Erreichen der Höhe des Dachs der Strahlungskammer 14 nahezu die gleiche Temperatur behält. Diese Temperatur liegt aber deutlich unter der adiabatischen Flammtemperatur, da bereits während der Verbrennung ständig Wärme an das Prozeßgas zur endothermen katalytischen Umwandlung abgegeben wird.

Oberhalb des Dachs der Strahlungskammer 14 sind die Katalysatorgefäße 10 jeweils in entsprechender Weise wie von dem Wärmeverteiler 16 mit geringem Abstand von dem feuerfesten Material des Gehäuses 13 umhüllt, so daß der Spalt 21 nach oben fortgesetzt wird. Selbstverständlich wäre es auch möglich, die Wärmeverteiler 16 bis an das obere Ende des Gehäuses 13 durchzuziehen und die Gehäusewand erst um den oberen Teil der Wärmeverteiler herumzulegen. Im oberen Teil des Katalysatorgefäßes 10, d.h. im Beispiel der Fig. 1 auf etwa 2/3 seiner Länge, sinkt die Temperatur der Verbrennungsgase infolge der stetigen Wärmeabgabe und der fehlenden Möglichkeit einer Wärmeaufnahme kontinuierlich ab. Das abgekühlte Verbrennungsgas verläßt den Reaktor durch die Rauchgasableitung 22 und kann in einem Konvektionsteil einer nicht dargestellten komplexeren Gesamtanlage weiter genutzt werden.

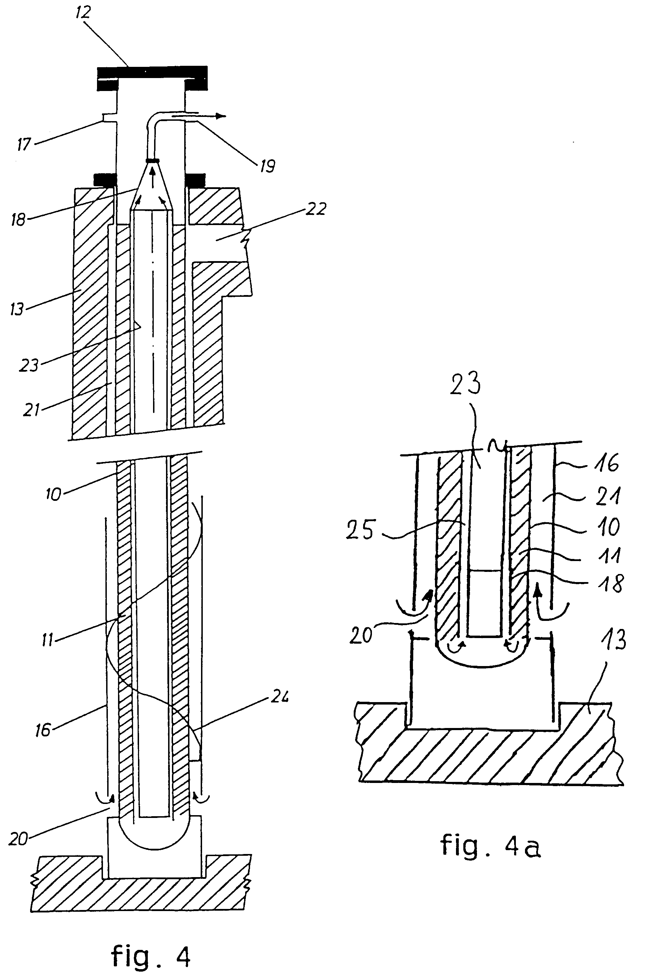

Die Fig. 4 und 4a zeigen eine abgewandelte Ausführungsform des erfindungsgemäßen Reaktors. Funktionsgleiche Teile sind mit denselben Bezugszeichen versehen, wie in den Fig. 1 bis 3, so daß hierauf nicht erneut eingegangen werden muß. Im Unterschied zu dem ersten Ausführungsbeispiel weist dieser Reaktor innerhalb des ringförmigen Spaltes 21 ein wendelförmiges Leitblech 24 auf, das den durchströmenden Verbrennungsgasstrom in eine zusätzliche Rotationsbewegung um die Längsachse des Katalysatorgefäßes 10 versetzt, so daß infolge der dadurch bewirkten schraubenlinienförmigen Gesamtbewegung des Verbrennungsgasstroms eine besonders gleichförmige Temperaturverteilung bei der Beheizung des Reaktors erzielt wird.

Das untere Ende des Katalysatorgefäßes 10 mit dem Wärmeverteiler 16 ist in Fig. 4a als vergrößerte Einzelheit dargestellt. Man erkennt ebenso wie in Fig. 4 innerhalb des Steigrohrs 18 einen als Wärmetauschförderer 23 wirkenden Einbau, der in Form eines vorzugsweise rohrförmigen Strömungsverdrängungskörpers ausgebildet ist und koaxial über im wesentlichen die gesamte Länge des Steigrohrs 18 verläuft. Sein Außendurchmesser ist kleiner als der Innendurchmesser des Steigrohrs 18, so daß zwischen beiden ein ringförmiger Raum 25 entsteht. Der rohrförmige Körper des Wärmetauschförderers 23 ist innen dicht verschlossen (z.B. im unteren Teil), so daß das in der Katalyse gebildete Produktgas nach Verlassen des mit dem Katalysatormaterial gefüllten ringförmigen Raum 11 nur durch diesen ringförmigen Raum 25 zur Produktgasableitung 19 nach oben strömen kann. Auf diese Weise wird das Produktgas zu einem innigen Wärmeaustausch mit dem nach unten strömenden zu erwärmenden Prozeßgas gezwungen, der durch die Wand des Steigrohrs 18 hindurch erfolgt. Anstelle eines rohrförmigen Wärmetauschförderers 23 könnte selbstverständlich auch ein Strömungsverdrängungskörper aus einem Vollmaterial verwendet werden.

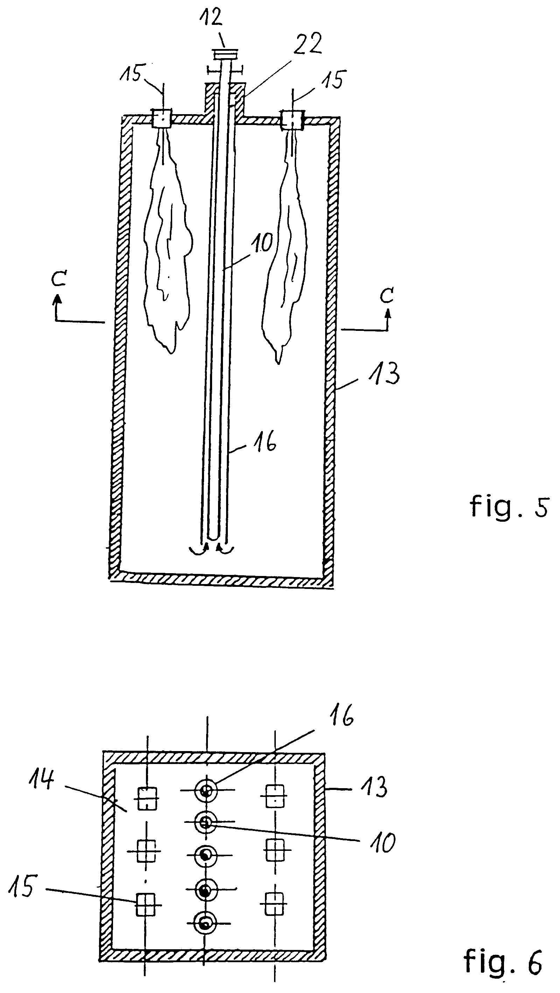

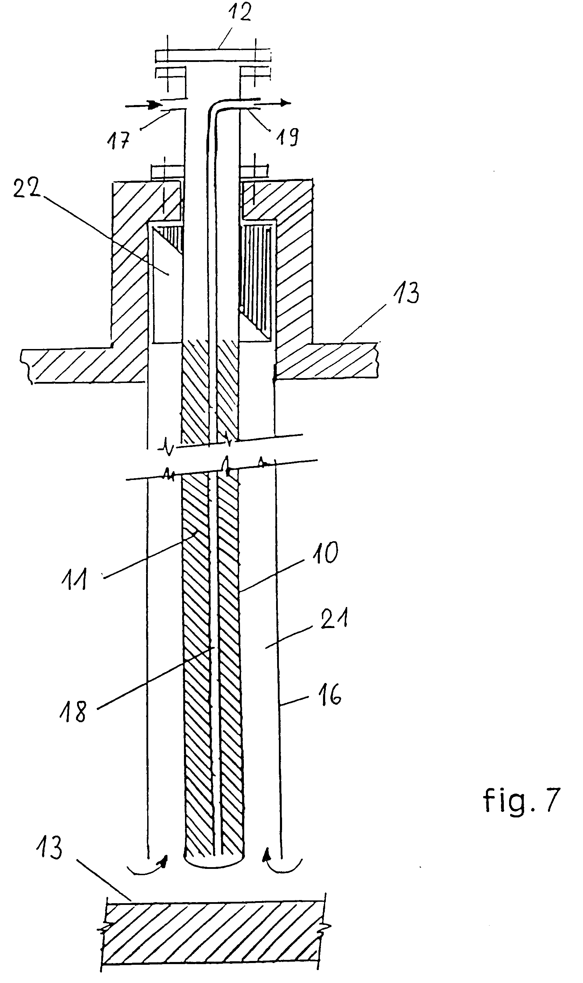

In den Fig. 5 bis 7 ist eine weitere Ausführungsform der Erfindung dargestellt, wobei die Fig. 5 und 6 die Ausbildung des Gehäuses 13 sowie die Anordnung der Brenner 15 und der Katalysatorgefäße 10 schematisch wiedergibt, während Fig. 7 das Katalysatorgefäß 10 genauer zeigt. Es wurden wiederum für funktionsgleiche Teile dieselben Bezugszeichen verwendet wie zuvor. Der Unterschied zu dem ersten Ausführungsbeispiel liegt in diesem Fall darin, daß die Strahlungskammer 14 praktisch das gesamte Gehäuse 13 ausfüllt und die Wärmeverteiler 16 sich jeweils über im wesentlichen die gesamte axiale Länge der Katalysatorgefäße 10 erstrecken. Auf diese Weise kann das durch den Spalt 21 nach oben strömende Verbrennungsgas auf seinem gesamten Weg Wärme an das Prozeßgas abgeben und gleichzeitig durch die Wand des Wärmeverteilers 16 Wärme aufnehmen, so daß es seine Temperatur auf diesem Wege praktisch konstant hält. Auf diese Weise wird ein isothermer katalytischer Reaktor gebildet. Dementsprechend weist das durch das Steigrohr 18 nach oben strömende Produktgas die gleiche Temperatur auf wie das durch den Ringraum 11 nach unten strömende Prozeßgas, so daß es nicht zu einem Wärmeaustausch zwischen diesen beiden Gasströmen kommt. Auf den Einbau eines Strömungsverdrängungskörpers in das Steigrohr kann daher verzichtet werden.

Ein besonderer Vorteil der Erfindung besteht darin, daß die Leistung eines katalytischen Reaktors in der Planung ohne eine Änderung der einzelnen Katalysatorgefäße 10 allein durch die Anzahl der Katalysatorgefäße 10 und der Brenner 15 in weiten Grenzen verändert werden kann. Infolge der nicht adiabatischen Verbrennung sind die Flammtemperaturen deutlich abgesenkt, so daß keine komplizierten und entsprechend teuren Feuerfestkonstruktionen erforderlich sind. Darüber hinaus bleibt die Wärmebelastung des rohrförmigen Wärmeverteilers vergleichsweise gering.

Eine Bauweise entsprechend den Ausführungsformen der Fig. 1 bis 4 eignet sich insbesondere für die Dampfreformierung von Kohlenwasserstoffen, während ein isothermer Reaktor, wie ihn die Fig. 5 bis 7 zeigen, besonders für Dehydrierprozesse, wie sie eingangs genannt wurden, Vorteile bietet.

## Patentansprüche

1. Katalytischer Reaktor für endotherme Reaktionen mit einem aus feuerfestem Material gebildeten Gehäuse (13), dessen Inneres durch heiße Verbrennungsgase beheizbar ist, die durch eine Rauchgasableitung (22) nach außen abführbar sind, wobei im Inneren des Gehäuses (13) jeweils mit Abstand voneinander mehrere Katalysatorgefäße (10) angeordnet sind, welche zumindest im Nahbereich ihrer Außenwand mit einem katalytischen Material gefüllt sind und eine Prozeßgaszuleitung (17) für das katalytisch zu behandelnde Material sowie eine Produktgasableitung (19) für das in der katalytischen Reaktion gebildete Produkt aufweisen, und wobei in dem Gehäuse (13) eine Vielzahl von Brennern (15) in der Weise angeordnet sind, daß die Katalysatorgefäße (10) zwischen den Brennern (15) liegen und der Flammbereich der Brenner (15) zur Gewährleistung einer nicht adiabatischen Verbrennung jeweils im Bereich der Katalysatorgefäße (10) liegt,
dadurch gekennzeichnet,
daß die Katalysatorgefäße (10) zumindest über einen Teil ihrer axialen Länge unter Belassung eines schmalen ringförmigen Spaltes (21) für den Durchtritt der heißen Verbrennungsgase jeweils von einem röhrenartigen Wärmeverteiler (16) aus einem gut wärmeleitenden Material, insbesondere aus Metall, umgeben sind, daß in den Katalysatorgefäßen (10), die an ihrem unteren Ende durch einen Boden dicht verschlossen sind, jeweils ein koaxial zur Längsachse angeordnetes, sich über im wesentlichen dessen gesamte axiale Länge erstreckendes, mit geringem Abstand vom Boden des Katalysatorgefäßes (10) unter Belassung eines Durchtrittsspaltes endendes Steigrohr (18) vorgesehen ist, wobei zwischen dem Steigrohr (18) und der äußeren Wand des Katalysatorgefäßes (10) ein ringförmiger Raum (11) gebildet wird, der von dem Prozeßgas von oben nach unten durchströmbar und mit dem katalytischen Material gefüllt ist und wobei die Produktgasableitung (19) oben an das Steigrohr (18) angeschlossen ist.

2. Reaktor nach Anspruch 1,
dadurch gekennzeichnet,
daß die Katalysatorgefäße (10) vertikal und im wesentlichen parallel zueinander angeordnet sind, daß der Abstand der unmittelbar benachbarten Katalysatorgefäße (10) voneinander jeweils gleich ist und daß die Brenner (15) symmetrisch zu den Katalysatorgefäßen (10) angeordnet sind.

3. Reaktor nach Anspruch 2,
dadurch gekennzeichnet,
daß zumindest ein Teil der Katalysatorgefäße (10) mit ihren Längsachsen in einer gemeinsamen Ebene liegen und daß die diesen Katalysatorgefäßen (10) zugeordneten Brenner in zwei Reihen nebeneinander spiegelsymmetrisch zur Ebene der Längsachsen der Katalysatorgefäße (10) angeordnet sind.

4. Reaktor nach einem der Ansprüche 2 oder 3,
dadurch gekennzeichnet,
daß die Brenner (15) mit ihrer Flammrichtung vertikal, insbesondere mit von oben nach unten weisender Flammrichtung angeordnet sind.

5. Reaktor nach einem der Ansprüche 3 bis 4,
dadurch gekennzeichnet,
daß abwechselnd mehrere parallel nebeneinander angeordnete Reihen von Katalysatorgefäßen (10) und Brennern (15) vorgesehen sind.

6. Reaktor nach einem der Ansprüche 2 bis 5,
dadurch gekennzeichnet,
daß die einer Reihe von Katalysatorgefäßen (10) zugeordneten Brenner (15) mit ihren Längsachsen in der Weise versetzt zu den Längsachsen der Katalysatorgefäße (10) angeordnet sind, daß jeweils ein Brenner (15) der einen Brennerreihe einem Brenner (15) der anderen Brennerreihe im Bereich der zwischen den Katalysatorgefäßen (10) bestehenden Zwischenräume gegenüberliegt.

7. Reaktor nach einem der Ansprüche 1 bis 6,
dadurch gekennzeichnet,
daß die Wärmeverteiler (16) sich zur Ausbildung eines isothermen Reaktors jeweils über im wesentlichen die gesamte axiale Länge des Katalysatorgefäßes (10) erstrecken.

8. Reaktor nach einem der Ansprüche 1 bis 6,
dadurch gekennzeichnet,
daß die Wärmeverteiler (16) sich jeweils nur über einen Teil der axialen Länge, insbesondere nur über den unteren Teil des Katalysatorgefäßes (10) erstrecken und daß die Katalysatorgefäße (10) über den restlichen Teil ihrer axialen Länge unter Fortsetzung des jeweiligen schmalen ringförmigen Spalts (21) von dem feuerfesten Material des Gehäuses (13) umgeben sind.

9. Reaktor nach einem der Ansprüche 1 bis 8,
dadurch gekennzeichnet,
daß in dem ringförmigen Spalt (21) ein wendelförmiges Leitblech (24) angeordnet ist, welches das jeweils durch den Spalt (21) strömende Verbrennungsgas in eine außen um das Katalysatorgefäß (10) schraubenlinienförmig rotierende Strömung versetzt.

10. Reaktor nach einem der Ansprüche 1 bis 9,
dadurch gekennzeichnet,
daß in dem Steigrohr (18) jeweils ein Wärmetauschförderer (23) in Form eines vorzugsweise rohrförmig ausgebildeten Strömungsverdrängungskörpers angeordnet ist, der unter Belassung eines zweiten ringförmigen, vom Produktgas von unten nach oben durchströmbaren Raum (25) koaxial über im wesentlichen die gesamte axiale Länge des Steigrohrs (18) verläuft.

11. Reaktor nach einem der Ansprüche 1 bis 10,
dadurch gekennzeichnet,
daß das Katalysatorgefäß (10) an seinem oberen Ende stirnseitig mit einem dicht verschließbaren Deckel (12) versehen ist, der außerhalb des Gehäuses liegt und durch den das katalytische Material einfüllbar ist, und daß die Prozeßgaszuleitung (17) und die Produktgasableitung (19) jeweils unterhalb des Deckels (12) seitlich aus dem oberen Teil des Katalysatorgefäßes (10) herausgeführt sind.

12. Reaktor nach einem der Ansprüche 1 bis 11,
dadurch gekennzeichnet,
daß die Katalysatorgefäße (10) und die Wärmeverteiler (16) frei hängend am oberen Teil des Gehäuses (13) befestigt sind, wobei deren unteres Ende jeweils mindestens in einem solchen Abstand vom Boden des Gehäuses (13) endet, daß unter Berücksichtigung der thermischen Längendehnungen im Betriebsfall noch ein freies Hängen gewährleistet ist und ein ausreichend großer Einlaßspalt (20) für das Einströmen der Verbrennungsgase in den ringförmigen Spalt (21) verbleibt.

13. Reaktor nach einem der Ansprüche 1 bis 12,
dadurch gekennzeichnet,
daß die Wärmeverteiler (16) an ihrem unteren Ende jeweils Schlitze in ihrer Wand aufweisen, durch die der Eintritt der Verbrennungsgase in den ringförmigen Spalt (21) erfolgt.

## Claims

1. A catalytic reactor for endothermic reactions with a housing (13) formed from fireproof material, the interior of which is able to be heated by hot combustion gases, which are able to be removed to the exterior through a flue gas outlet pipe (22), in which in the interior of the housing (13) several catalyst vessels (10) are arranged, in each case spaced apart from each other, which at least in the vicinity of their outer wall are filled with a catalytic material and have a process gas supply line (17) for the material which is to be treated catalytically and also have a product gas outlet pipe (19) for the product formed in the catalytic reaction, and in which in the housing (13) a plurality of burners (15) are arranged such that the catalyst vessels (10) lie between the burners (15) and the flame range of the burners (15) in each case lies in the region of the catalyst vessels (10) to ensure a non-adiabatic combustion,
characterised in that
the catalyst vessels (10), at least over a portion of their axial length, leaving a narrow annular gap (21) for the passage of the hot combustion gases, are in each case surrounded by a tube-like heat distributor (16) of a material having good thermal conductivity, in particular of metal, that in the catalyst vessels (10), which are tightly closed at their lower end by a base, in each case a riser pipe (18) is provided, arranged coaxially to the longitudinal axis, extending over substantially its entire axial length, ending at a small distance from the base of the catalyst vessel (10) leaving a passage gap, in which between the riser pipe (18) and the outer wall of the catalyst vessel (10) an annular space (11) is formed, which is able to have the process gas flowing through it from top to bottom and is filled with the catalytic material and in which the product gas outlet pipe (19) is connected at the top to the riser pipe (18).

2. A reactor according to Claim 1,
characterised in that
the catalyst vessels (10) are arranged vertically and substantially parallel to each other, that the spacing of the immediately adjacent catalyst vessel (10) from each other is identical in each case and that the burners (15) are arranged symmetrically to the catalyst vessels (10).

3. A reactor according to Claim 2,
characterised in that
at least a portion of the catalyst vessels (10) lie with their longitudinal axes in a common plane and that the burners associated with these catalyst vessels (10) are arranged in two rows adjacent to each other in mirror symmetry to the plane of the longitudinal axes of the catalyst vessels (10).

4. A reactor according to one of Claims 2 or 3,
characterised in that
the burners (15) are arranged with their flame direction vertical, in particular with a flame direction pointing from top to bottom.

5. A reactor according to one of Claims 3 to 4,
characterised in that
alternately several rows of catalyst vessels (10) and burners (15) are provided, arranged parallel adjacent to each other.

6. A reactor according to one of Claims 2 to 5,
characterised in that
the burners (15) associated with a row of catalyst vessels (10) are arranged with their longitudinal axes staggered to the longitudinal axes of the catalyst vessels (10) such that in each case one burner (15) of the one burner row lies opposite a burner (15) of the other burner row in the region of the intermediate spaces existing between the catalyst vessels (10).

7. A reactor according to one of Claims 1 to 6,
characterised in that
the heat distributors (16) extend for the formation of an isothermal reactor in each case over substantially the entire axial length of the catalyst vessel (10).

8. A reactor according to one of Claims 1 to 6,
characterised in that
the heat distributors (16) extend in each case only over a portion of the axial length, in particular only over the lower portion of the catalyst vessel (10) and that the catalyst vessels (10) over the remaining portion of their axial length, with continuation of the respective narrow annular gap (21), are surrounded by the fireproof material of the housing (13).

9. A reactor according to one of Claims 1 to 8,
characterised in that
in the annular gap (21) a spiral-shaped baffle plate (24) is arranged, which sets the combustion gas, flowing in each case through the gap (21) into a current rotating in a helical form externally around the catalyst vessel (10).

10. A reactor according to one of Claims 1 to 9,
characterised in that
in the riser pipe (18) in each case a heat exchange promoter (23) is arranged in the form of a flow displacement body, preferably constructed in a tubular shape, which, leaving a second annular space (25), able to be have the product gas flowing through it from bottom to top, runs coaxially over substantially the entire axial length of the riser pipe (18).

11. A reactor according to one of Claims 1 to 10,
characterised in that
the catalyst vessel (10) is provided at its upper end on the end face with a tightly closable cover (12), which lies outside the housing and is able to be filled by the catalytic material, and that the process gas supply line (17) and the product gas outlet pipe (19) in each case are guided out beneath the cover (12) laterally from the upper part of the catalyst vessel (10).

12. A reactor according to one of Claims 1 to 11,
characterised in that
the catalyst vessels (10) and the heat distributors (16) are secured, hanging freely on the upper part of the housing (13), in which the lower end thereof in each case ends at least at such a distance from the base of the housing (13) that taking into account the thermal dilatations of length in the case of operation a free hanging is still ensured and a sufficiently large inlet gap (20) remains for the inflow of the combustion gases into the annular gap (21).

13. A reactor according to one of Claims 1 to 12,
characterised in that
the heat distributors (16) have at their lower end in each case slits in their wall, through which the entry of the combustion gases into the annular gap (21) takes place.

## Revendications

1. Réacteur catalytique pour des réactions endothermiques, comportant un carter (13) formé d'une matière réfractaire, dont l'intérieur peut être chauffé par des gaz de combustion chauds, qui peuvent être évacués vers l'extérieur par un conduit d'évacuation des gaz de fumée (22), à l'intérieur du carter (13) étant agencés, à chaque fois, plusieurs récipients de catalyseur (10) à distance les uns des autres, lesquels sont remplis, au moins dans la zone proche de leur paroi externe, d'une matière catalytique et présentent un conduit d'amenée de gaz de procédé (17) pour la matière à traiter de façon catalytique, ainsi qu'un conduit d'évacuation de gaz de produit (19) pour le produit formé par la réaction catalytique, et, dans le carter (13), étant agencée une pluralité de brûleurs (15) de façon que les récipients de catalyseur (10) se trouvent entre les brûleurs (15) et que la zone de flamme des brûleurs (15) se trouve à chaque fois dans la zone des récipients de catalyseur (10) pour garantir une combustion non adiabatique,
caractérisé en ce que les récipients de catalyseur (10) sont entourés, au moins sur une partie de leur longueur axiale, en laissant une fente étroite annulaire (21) pour le passage des gaz de combustion chauds, à chaque fois, par un répartiteur de chaleur tubulaire (16) en une matière conduisant bien la chaleur, en particulier en métal, en ce que, dans les récipients de catalyseur (10), qui sont fermés de façon étanche à leur extrémité inférieure par un fond, il est prévu, à chaque fois, un conduit montant (18) agencé de façon coaxiale à l'axe longitudinal, s'étendant sur généralement toute sa longueur axiale, et s'achevant à une faible distance du fond du récipient de catalyseur (10) en laissant une fente de passage, un espace annulaire (11) étant formé entre le conduit montant (18) et la paroi externe du récipient de catalyseur (10), espace qui peut être traversé de haut en bas par le gaz de procédé et est rempli de la matière catalytique, et le conduit d'évacuation de gaz de produit (19) étant raccordé, en haut, au conduit montant (18).

2. Réacteur selon la revendication 1,
caractérisé en ce que les récipients de catalyseur (10) sont agencés verticalement et généralement parallèlement les uns aux autres, en ce que la distance des récipients de catalyseur (10) directement voisins les uns des autres est à chaque fois identique, et en ce que les brûleurs (15) sont agencés symétriquement aux récipients de catalyseur (10).

3. Réacteur selon la revendication 2,
caractérisé en ce qu'au moins une partie des récipients de catalyseur (10) se trouvent, par leurs axes longitudinaux, dans un plan commun, et en ce que les brûleurs associés à ces récipients de catalyseur (10) sont agencés en deux rangées l'une à côté de l'autre de façon symétrique par rapport au plan des axes longitudinaux des récipients de catalyseur (10).

4. Réacteur selon une des revendications 2 ou 3,
caractérisé en ce que les brûleurs (15) sont agencés avec leur direction de flamme verticale, en particulier une direction de flamme orientée du haut vers le bas.

5. Réacteur selon une des revendications 3 à 4,
caractérisé en ce que, alternativement, plusieurs rangées agencées parallèlement les unes à côté des autres de récipients de catalyseur (10) et de brûleurs (15) sont prévues.

6. Réacteur selon une des revendications 2 à 5,
caractérisé en ce que les brûleurs (15) associés à une rangée de récipients de catalyseur (10), avec leurs axes longitudinaux, sont agencés de façon décalée par rapport aux axes longitudinaux des récipients de catalyseur (10), de façon que, à chaque fois, un brûleur (15) d'une rangée de brûleurs soit opposé à un brûleur (15) de l'autre rangée de brûleurs dans la zone des espaces intermédiaires existant entre les récipients de catalyseur (10).

7. Réacteur selon une des revendications 1 à 6,
caractérisé en ce que les répartiteurs de chaleur (16) s'étendent, à chaque fois, sur sensiblement toute la longueur axiale du récipient de catalyseur (10), pour former un réacteur isotherme.

8. Réacteur selon une des revendications 1 à 6,
caractérisé en ce que les répartiteurs de chaleur (16) s'étendent, à chaque fois, uniquement sur une partie de la longueur axiale, en particulier uniquement sur la partie inférieure du récipient de catalyseur (10), et en ce que les récipients de catalyseur (10), sur la partie restante de leur longueur axiale, sont entourés par la matière réfractaire du carter (13) en continuation de la fente annulaire étroite respective (21).

9. Réacteur selon une des revendications 1 à 8,
caractérisé en ce que, dans la fente annulaire (21), il est agencé une tôle de guidage (24) de forme hélicoïdale, laquelle décale le gaz de combustion s'écoulant à chaque fois à travers la fente (21) en un écoulement rotatif de forme hélicoïdale autour du récipient de catalyseur (10) extérieurement.

10. Réacteur selon une des revendications 1 à 9,
caractérisé en ce que, dans le conduit montant (18), il est agencé, à chaque fois, un échangeur de chaleur (23) sous forme d'un corps de refoulement d'écoulement réalisé avantageusement de façon tubulaire, qui, en laissant un second espace annulaire (25) pouvant être traversé de bas en haut par le gaz de produit, s'étend coaxialement sur généralement toute la longueur axiale du conduit montant (18).

11. Réacteur selon une des revendications 1 à 10,
caractérisé en ce que le récipient de catalyseur (10), à son extrémité supérieure, est muni frontalement d'un couvercle (12) pouvant être fermé de façon étanche, qui se trouve à l'extérieur du carter et peut être rempli par la matière catalytique, et en ce que le conduit d'amenée de gaz de procédé (17) et le conduit d'évacuation de gaz de produit (19) sont guidés, à chaque fois, au-dessous du couvercle (12) latéralement hors de la partie supérieure du récipient de catalyseur (10).

12. Réacteur selon une des revendications 1 à 10,
caractérisé en ce que les récipients de catalyseur (10) et les répartiteurs de chaleur (16) sont fixés de façon librement suspendue à la partie supérieure du carter (13), leur extrémité inférieure s'achevant, à chaque fois, au moins à une distance du fond du carter (13) telle, en tenant compte des dilatations thermiques longitudinales en service, qu'une suspension libre est encore garantie et qu'une fente d'entrée suffisamment grande (20) pour l'entrée des gaz de combustion dans la fente annulaire (21) demeure.

13. Réacteur selon une des revendications 1 à 12,
caractérisé en ce que les répartiteurs de chaleur (16) présentent, à leur extrémité inférieure, à chaque fois des fentes dans leur paroi, à travers lesquelles se produit l'entrée des gaz de combustion dans la fente annulaire (21).
